# EUROPÄISCHE PATENTSCHRIFT

(11) **EP 2 598 828 B1**
(45) Veröffentlichungstag und Bekanntmachung des Hinweises auf die Patenterteilung: **13.05.2015**
(21) Anmeldenummer: 11801574.2
(22) Anmeldetag: 15.07.2011
(51) Int. Cl.: F41H 5/22, E05F 15/00

(54) **VERFAHREN UND MESSVORRICHTUNG ZUR DETEKTION VON OBJEKTEN IN EINER FAHRZEUGLUKENÖFFNUNG**
METHOD AND MEASURING DEVICE FOR DETECTING OBJECTS IN A VEHICLE HATCH OPENING
PROCEDE ET DISPOSITIF DE MESURE POUR DETECTER DES OBJETS DANS UNE OUVERTURE DE LUCARNE DE VEHICULE

(30) Priorität: 27.07.2010 DE 102010036646
(43) Veröffentlichungstag der Anmeldung: 05.06.2013
(73) Patentinhaber: Krauss-Maffei Wegmann GmbH & Co. KG, 80997 München (DE)
(72) Erfinder: ZENKER, Klaus, 34127 Kassel (DE); FÖHST, Stefan, 34127 Kassel (DE); BISCHLER, Eduard, 68623 Lampertheim (DE); SÜNKELER, Martin, 68623 Lampertheim (DE); POK, Ulrich, 06120 Halle (DE)
(74) Vertreter: Feder Walter Ebert
(86) Internationale Anmeldenummer: PCT/DE2011/075168
(87) Internationale Veröffentlichungsnummer: WO 2012/022340

(56) Entgegenhaltungen:
- DE-A1-102006 051 184
- DE-A1-102008 023 273
- DE-A1-102008 028 932
- DE-U1-202006 013 335

## Beschreibung

Die Erfindung betrifft ein Verfahren und eine Messvorrichtung zur Detektion eines Objekts in einer mit einem bewegbaren Lukendeckel verschließbaren Lukenöffnung, insbesondere an einem militärischen Fahrzeug, mit einer Anregungselektrode zur Erzeugung eines Felds, insbesondere gegenüber einem metallischen Korpus des Fahrzeugs, und einer Messelektrode zum Ermitteln von durch das Objekt verursachten Feldänderungen.

Ein weiterer Gegenstand der Erfindung ist ein Fahrzeug mit einer über einen Lukendeckel verschließbaren Lukenöffnung und einer Messvorrichtung, wobei die Anregungselektrode und/oder die Messelektrode im Bereich der Lukenöffnung angeordnet sein kann.

In militärischen Fahrzeugen werden üblicherweise schließbare Fahrzeuglukenöffnungen an verschiedenen Stetlen des Fahrzeugs vorgesehen, beispielsweise als Ein-/Ausstiegsluken. Ferner kann für den Kommandanten sowie für den Fahrer des Fahrzeugs eine Fahrzeuglukenöffnung vorgesehen sein, die es ihm erlaubt, den oberen Teil seines Körpers, insbesondere seinen Kopf, aus dem Fahrzeug zu strecken. Durch dieses sogenannte "Überlukefahren" ergeben sich verbesserte Sichtverhältnisse.

Zum Schutz vor militärischen Bedrohungen ist die Lukenöffnung in der Regel mit einem gepanzerten Lukendeckel verschließbar, der massiv ausgeführt ist und ein erhebliches Gewicht aufweist. Aus der DE 10 2008 023 273 A1 ist eine mit einem bewegbaren Lukendeckel verschließbare Lukenöffnung bekannt, die im Bereich der Lukenöffnung ein kapazitives Sensorelement mit einer Messelektrode aufweist. Mithilfe des Sensorelements kann ein Objekt innerhalb der Lukenöffnung detektiert und die Bewegung des Lukendeckels verhindert werden. Typischerweise detektierte Objekte sind Körperteile von Besatzungsmitgliedern sowie Ausrüstungsgegenstände. Dadurch, dass die Bewegung des massiven Lukendeckels verhindert wird, kann der Verletzung von Besatzungsmitgliedern, die sich innerhalb der Lukenöffnung befinden, vorgebeugt werden. Auch der Beschädigung von Ausrüstungsgegenständen, die die Besatzungsmitglieder mit sich führen, kann dadurch entgegengewirkt werden.

Die Verwendung einer kapazitiven Messvorrichtung ist vorteilhaft, da eine schnelle und einfache Erkennung eines Objekts möglich ist. Eine kapazitive Messvorrichtung zur Detektion eines Objekts, die auf dem Dreielektroden-Messprinzip basiert, ist ferner aus der DE 10 2007 038 225 A1 bekannt. Diese Messvorrichtung ermöglicht eine weite räumliche Trennung der Messelektroden von der Auswerteelektronik. Aus Gründen der Signalintegrität erfolgt die Verbindung der Messelektroden mit der Auswerteelektronik über Koaxialkabel, die jedoch eine hohe Temperaturabhängigkeit aufweisen und damit die Messempfindlichkeit beeinflussen können. Bei diesem Detektionsverfahren kann das Problem auftreten, dass der sich in die Lukenöffnung bewegende Lukendeckel als Objekt erkannt wird und die Lukendeckelsteuerung daraufhin die Bewegung des Lukendeckels blockiert, da das Messsignal, welches durch den massiven Lukendeckel erzeugt wird, in der gleichen Größenordnung wie das durch ein sich in der Lukenöffnung befindendes Objekt erzeugte Messsignal liegen kann. Folglich ist eine Unterscheidung zwischen einem zu detektierenden Objekt und einem Lukendeckel nicht zuverlässig möglich.

Aus der DE 10 2008 028 932 A1, die jeweils den Ausgangspunkt für den Oberbegriff der Ansprüche 1 und 10 bildet, ist ein Verfahren zur Detektion eines Objekts im

Bewegungsraum eines Fahrzeugverdecks bekannt, bei welchem stellvorgangsbedingte Änderungen des Felds kompensierbar sind.

Aufgabe der Erfindung ist es, die Detektion von Objekten in einer mit einem bewegbaren Lukendeckel verschließbaren Lukenöffnung mit einer erhöhten Zuverlässigkeit zu ermöglichen.

Die Aufgabe wird erfindungsgemäß gelöst durch ein Verfahren mit den Merkmalen des Patentanspruchs 1 sowie durch eine Vorrichtung mit den Merkmalen des Patentanspruchs 10 und ein Fahrzeug mit den Merkmalen des Patentanspruchs 14.

Erfindungsgemäß wird das Feld beim Schließen des Lukendeckels in Abhängigkeit von der Stellung des Lukendeckels erzeugt. Mit einem derartigen Verfahren kann das von der Anregungselektrode erzeugte Feld in Abhängigkeit von der Stellung des Lukendeckels so eingestellt werden, dass der Lukendeckel nicht als Objekt erkannt wird. Folglich kann für alle Stellungen des Lukendeckels während der Schließbewegung eine erhöhte Zuverlässigkeit der Detektion von Objekten in der Lukenöffnung erreicht werden. Insbesondere kann das Verfahren bei einer kapazitiven Messvorrichtung nach dem Dreielektroden-Messprinzip Anwendung finden.

Es ist vorgesehen, dass die Anregungselektrode mit einem Spannungsgenerator verbunden ist, und dass der vom Spannungsgenerator erzeugte Spannungsverlauf, insbesondere hinsichtlich Amplitude, Frequenz und/oder Flankensteilheit, in Abhängigkeit von der Stellung des Lukendeckels eingestellt wird. Dabei folgt das erzeugte elektrische Feld dem vom Spannungsgenerator vorgegebenen Spannungsverlauf. Durch die Parameter Amplitude, Frequenz und Flankensteilheit kann das erzeugte Feld vorteilhaft so eingeregelt werden, dass es im Bereich der Messelektrode für alle Stellungen des Lukendeckels im Wesentlichen konstant ist.

Von Vorteil für die Erzeugung des Felds in Abhängigkeit von der Stellung des Lukendeckels ist es bei dem Verfahren, dass die Stellung des Lukendeckels einer Steuereinheit zum Steuern des Spannungsgenerators zugeführt wird. Um Flexibilität hinsichtlich der Programmierung der Steuereinheit zu gewährleisten, kann die Steuereinheit einen Microcontroller und/oder einen Speicher umfassen.

Erfindungsgemäß ist der Microcontroller entfernbar ausgebildet. Der entfernbare Microcontroller kann während einer Kalibrierungsprozedur in der Steuereinheit eingebracht sein und im Normalbetrieb entfallen. Durch Entfernen des Microcontrollers im Normalbetrieb kann die Anfälligkeit der Lukendeckelsteuerung für Software-Fehler verringert werden.

Bevorzugt ist zur Ermittlung der Lukendeckelstellung die Steuereinheit mit einer Antriebssteuereinheit des Lukendeckels und/oder mit einem Lukenstellungssensor verbunden. Damit ist der Vorteil verbunden, dass die Steuereinheit die Stellung des Lukendeckels erfassen und den Spannungsgenerator in Abhängigkeit von der Lukendeckelstellung steuern kann.

Gemäß einer weiteren Ausgestaltung kann das Verfahren eine, insbesondere aus einem Speicher abrufbare, Vorschrift zur Einstellung des Spannungsverlaufs verwenden. Dies bringt den Vorteil mit sich, dass die Vorschrift nicht wiederholt ermittelt werden muss. Im regulären Gebrauch der Lukenöffnung ist auch keine Änderung der Vorschrift zu erwarten. Eine Änderung kann hingegen nötig werden, wenn der Lukendeckel ausgetauscht oder verändert wurde, zusätzliche Elemente, wie beispielsweise Panzerungen, im Bereich der Lukenöffnung angebracht wurden oder ein Sensor oder ein Teil davon, insbesondere eine Messelektrode, ausgetauscht wurden. Nach diesen oder ähnlichen Änderungen im Bereich der Lukenöffnung kann eine neue Vorschrift in dem Speicher abgelegt werden.

Als besonders vorteilhaft erweist sich eine Weiterbildung des Verfahrens, bei der die Vorschrift derart gestaltet ist, dass die durch den Lukendeckel verursachte Feldbeeinflussung im Wesentlichen kompensiert wird. Durch diese Kompensation kann eine im Wesentlichen von der Stellung des Lukendeckels unabhängige Feldverteilung innerhalb der Lukenöffnung erreicht werden. Insbesondere kann mit diesem Verfahren die Auswirkung des Lukendeckels auf das Feld im Bereich der Messelektrode kompensiert werden.

Nach einer weiteren Ausgestaltung des Verfahrens kann die Vorschrift derart gestaltet sein, dass bei freier Lukenöffnung ein von der Messelektrode an eine Auswerteeinheit übermitteltes Signal beim Schließen des Lukendeckels im Wesentlichen konstant gehalten wird. Dabei kann das übermittelte Signal sowohl das nicht aufbereitete Ausgangssignal der Messelektrode, als auch ein aufbereitetes Signal insbesondere innerhalb der Auswerteeinheit sein.

Diese Kompensation kann bewirken, dass das Signal der Messelektrode bei freier Lukenöffnung konstant bleibt. Damit kann gleichzeitig der Effekt erzielt werden, dass ein in die Lukenöffnung eingebrachtes Objekt bei teilweise geschlossenem Lukendeckel zu einer Feldänderung zumindest gleicher Größenordnung wie bei vollständig geöffnetem Lukendeckel führt. Durch eine Verkürzung der Feldlinien durch den sich schließenden Lukendeckel kann darüber hinaus beim Einbringen eines Objekts in die Lukenöffnung eine größere Feldänderung und somit ein größeres Signal an der Messelektrode bewirkt werden. Dieser Effekt ist vorteilhaft, da die Verletzungsgefahr in der Lukenöffnung mit dem Schließen des Lukendeckels zunimmt. Somit kann erreicht werden, dass in einem Restspalt der Lukenöffnung ein Objekt mit hoher Empfindlichkeit detektiert werden kann.

Vorteilhaft ist ein Verfahren, bei dem die Vorschrift nicht während der Detektion von Objekten, sondern in einer der Detektion vorausgehenden Kalibrierungsprozedur ermittelt wird, bei der die Lukenöffnung frei von Objekten ist. Durch die Kalibrierungsprozedur kann der Einfluss des Lukendeckels auf das Feld an den Messelektroden und somit auf das Ergebnis der Messung ermittelt werden. Die Kalibrierungsprozedur muss nicht mehrfach ausgeführt werden, sondern kann z.B. nur einmal nach Installation der Messvorrichtung an einem Fahrzeug durchgeführt werden.

Von Vorteil für die Bestimmung der Vorschrift ist ein Verfahren, bei dem in der Kalibrierungsprozedur die Messelektrode mit der Steuereinheit zur Bildung eines Regelkreises verbunden ist. In der Kalibrierungsprozedur bildet die Steuereinheit den Regler, der Spannungsgenerator das Stellglied sowie die Feldbeeinflussung durch den Lukendeckel die Störgröße des Regelkreises. Die Regelstrecke wird von dem erzeugten Feld, der Messelektrode sowie den mit der Steuereinheit verbundenen Teilen der Auswerteeinheit gebildet. Die Verwendung eines Regelkreises erlaubt es, dass die Steuereinheit den Spannungsgenerator derart einstellt, dass die Stellung des Lukendeckels die Messung nicht beeinflusst.

Gemäß einer Weiterbildung des Erfindungsgedankens ist der Sollwert des Regelkreises über eine Einstellvorrichtung, insbesondere ein Potentiometer, einstellbar. Durch die Einstellvorrichtung kann die Messempfindlichkeit eingestellt werden. Ferner kann eine Anpassung an die beim Fahrzeug vorliegenden Gegebenheiten erreicht werden.

Gemäß einer weiteren Ausgestaltung wird vorgeschlagen, dass bei dem Verfahren in der Kalibrierungsprozedur der Lukendeckel zwischen zwei unterschiedlichen Stellungen bewegt wird, insbesondere zwischen der vollständig geöffneten und der vollständig geschlossenen Stellung. Durch das Abfahren eines Bereichs zwischen zwei unterschiedlichen Stellungen kann erreicht werden, dass die durch den Lukendeckel verursachte Feldbeeinflussung im Wesentlichen für den gesamten Bereich zwischen den beiden Stellungen kompensiert wird.

Eine erfindungsgemäße Messvorrichtung zur Detektion eines Objekts in einer mit einem bewegbaren Lukendeckel verschließbaren Lukenöffnung, insbesondere an einem militärischen Fahrzeug, mit einer Anregungselektrode zur Erzeugung eines Felds, insbesondere gegenüber einem metallischen Korpus des Fahrzeugs, und einer Messelektrode zum Ermitteln von durch das Objekt verursachten Feldänderungen ist derart ausgestaltet, dass die Messvorrichtung mit einer Antriebssteuereinheit des Lukendeckels verbunden ist, wobei das Feld beim Schließen des Lukendeckels in Abhängigkeit von der Stellung des Lukendeckels erzeugbar ist. Damit wird eine Messvorrichtung vorgeschlagen, die zur Ausführung des oben beschriebenen Verfahrens und dessen vorteilhaften Weiterbildungen geeignet ist. Die dadurch resultierenden Vorteile ergeben sich analog zu denen des Messverfahrens.

Die Messvorrichtung kann einen elektronischen Signalaufbereiter umfassen, beispielsweise zur Verstärkung von Signalen, zur Beseitigung von Störungen, zur Gleichrichtung von Signalen sowie zur Wandlung von analogen in digitale Signale und umgekehrt.

Bevorzugt ist die Messelektrode über eine Signalstrecke mit einer Auswerteeinheit zu der von der Messelektrode abgegebenen Signale verbunden und ein elektronischer Signalaufbereiter, insbesondere ein Verstärker und/oder Gleichrichter, messelektrodenseitig in der Signalstrecke angeordnet. Messelektrodenseitig im Sinne der Erfindung bedeutet, dass sich der elektronische Signalaufbereiter entlang der Signalstrecke in einer Position befindet, die sich durch eine kürzere Entfernung zur Messelektrode als zu der Auswerteeinheit auszeichnet. Dadurch wird erreicht, dass der Teil der Signalstrecke zwischen Messelektrode und Signalaufbereiter möglichst kurz ist. Dabei erweist es sich als vorteilhaft, dass das relativ schwache Signal der Messelektrode vor der Übertragung über den Teil der Signalstrecke zwischen Signalaufbereiter und Auswerteeinheit verstärkt wird.

Bevorzugt ist der Signalaufbereiter in einer elektronischen Schaltung, insbesondere in einem IC integriert. Dadurch können parasitäre Effekte durch lange Verbindungsleitungen und/oder diskrete Bauelemente reduziert und die Wirkung des Signalaufbereiters verbessert werden.

In einer bevorzugten Ausführung umfasst die Messvorrichtung mindestens zwei Messelektroden, die über eine Signalstrecke mit der Auswerteeinheit verbunden sind, wobei die Signalaufbereiter der mindestens zwei Signalstrecken in einer elektronischen Schaltung zusammengefasst sind. Dabei kann die elektronische Schaltung im Bereich der Lukenöffnung zwischen zwei Messelektroden angeordnet werden, was eine besonders kompakte Bauform der Messvorrichtung im Bereich der Lukenöffnung ermöglicht.

Um eine einfache Installation der Messvorrichtung zu ermöglichen, kann die Signalstrecke ein Verbindungskabel umfassen. Eine besonders bevorzugte Ausführung ergibt sich, wenn die elektronische Schaltung für jede Signalstrecke mittels eines eigenen Verbindungskabels mit der Auswerteeinheit verbunden ist. Dabei kann die elektronische Schaltung derart ausgebildet sein, dass die Signalaufbereiter der Signalstrecken getrennt voneinander ausgeführt sind.

Des Weiteren kann die elektronische Schaltung für jede Signalstrecke mittels eines gemeinsamen Verbindungskabels mit der Auswerteeinheit verbunden sein. Die elektronische Schaltung kann derart gestaltet sein, dass die Signale mehrerer Messelektroden mittels eines Signalaufbereiters kombinierbar sind. Folglich können die Signale mehrerer Signalstrecken über ein gemeinsames Verbindungskabel zu der Auswerteeinheit übertragbar sein.

Ein besonderer Vorteil der erfindungsgemäßen Messvorrichtung besteht darin, dass die Messelektrode und der Signalaufbereiter in einer baulichen Einheit zusammengefasst sein können. Dadurch wird eine besonders kompakte und gegen äußere Einflüsse geschützte Bauweise möglich.

Bevorzugt ist die Messelektrode im Bereich der Lukenöffnung angeordnet, so dass eine besonders hohe Messempfindlichkeit im Bereich der Lukenöffnung erreichbar ist. Ferner kann es vorteilhaft sein, dass die Auswerteeinheit abseits der Lukenöffnung angeordnet ist. Insbesondere an militärischen Fahrzeugen kann die Auswerteeinheit vorteilhaft im gut geschützten Fahrzeuginneren abseits der Lukenöffnung platziert sein.

Um die Wirkung der Signalaufbereitung zu maximieren, sollte sich der Signalaufbereiter möglichst nah an der Signalquelle befinden. Daher ist in einer bevorzugten Ausgestaltung der Signalaufbereiter zwischen der Messelektrode und dem Verbindungskabel angeordnet.

Bevorzugt kann die Messvorrichtung mindestens zwei Messelektroden umfassen, die an unterschiedlichen Positionen angeordnet sind, insbesondere über den Umfang der Lukenöffnung verteilt. Dadurch kann die Abdeckung eines möglichst großen Bereichs innerhalb der Lukenöffnung erreicht werden, in dem Objekte detektiert werden können.

Ferner wird zur Lösung der Aufgabe ein Fahrzeug mit einer über einen Lukendeckel verschließbaren Lukenöffnung und einer Messvorrichtung der bereits beschriebenen Art angegeben, wobei insbesondere die Anregungselektrode und/oder die Messelektrode im Bereich der Lukenöffnung angeordnet ist. Bei einem Fahrzeug dieser Art kann die Messempfindlichkeit zur Detektion von Objekten in der Lukenöffnung besonders hoch sein, wenn das zu detektierende Objekt sich nah bei der Anregungselektrode und/oder der Messelektrode befindet.

Weitere Einzelheiten und Vorteile des Detektionsverfahrens sowie der zugehörigen Vorrichtung an einem Fahrzeug werden nachfolgend anhand eines in den Zeichnungen dargestellten Ausführungsbeispiels erläutert. Darin zeigen:
- Fig. 1: eine schematische Schnittdarstellung einer Fahrzeuglukenöffnung mit der erfindungsgemäßen Messvorrichtung;
- Fig. 2: ein Blockdiagramm einer Ausgestaltung der erfindungsgemäßen Messvorrichtung;
- Fig. 3: ein Blockdiagramm einer zweiten Ausgestaltung der erfindungsgemäßen Messvorrichtung; und
- Fig. 4: eine schematische Darstellung der baulichen Einheit von einer Messelektrode mit elektronischem Signalaufbereiter.

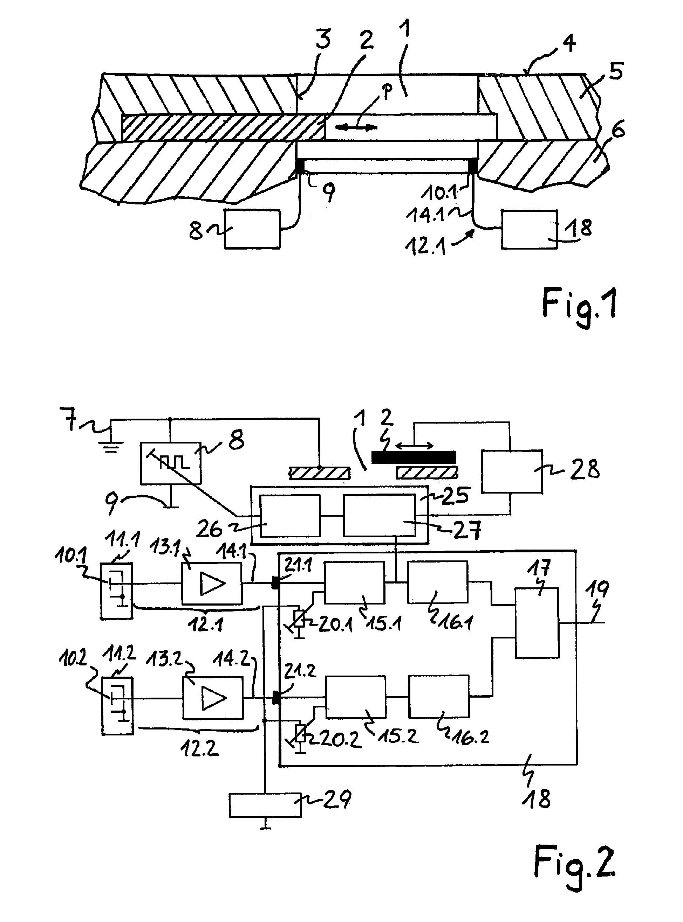

Die Fig. 1 zeigt eine Lukenöffnung 1 eines militärischen Fahrzeugs, die über einen als Schließelement dienenden gepanzerten Lukendeckel 2 verschließbar ist. Dieser Lukendeckel 2 ist in Richtung des dargestellten Pfeils P hin und her bewegbar und befindet sich in der in Fig. 1 dargestellten geöffneten Stellung zwischen einer metallischen Außenplatte 5 und einer metallischen Innenplatte 6 des gepanzerten Fahrzeugs. Nach Bewegen des Lukendeckels 2 der Schiebeluke in die geschlossene Stellung ist die Lukenöffnung 1 vollständig von dem Lukendeckel 2 abgedeckt und das Fahrzeug somit gas- und wasserdicht verschlossen. Zum Schutz vor Geschossen ist der Lukendeckel 2 gepanzert ausgeführt und weist ein erhebliches Gewicht auf. Daher ist zum Bewegen des Lukendeckels 2 ein in den Figuren nicht dargestellter Antriebsmechanismus vorgesehen, der hydraulisch, pneumatisch und insbesondere elektromotorisch zu betätigen sein kann und der über eine Antriebssteuereinheit 28 gesteuert wird.

Die dargestellte Lukenöffnung 1 kann in einem militärischen Fahrzeug insbesondere derart angeordnet sein, dass sie sich über dem Sitz des Kommandanten bzw. Fahrers befindet, dessen Kopf während der Fahrt aus der Lukenöffnung 1 ragt. Durch dieses "Überlukefahren" wird die Rundumsicht stark verbessert. Im Falle eines Kampfeinsatzes ist es jedoch erforderlich, die Lukenöffnung 1 zu schließen, so dass die Besatzung des militärischen Fahrzeugs im Fahrzeuginneren vor der Einwirkung von militärischen Bedrohungen geschützt ist.

Um zu verhindern, dass die Lukenöffnung 1 geschlossen wird, während sich ein Objekt, insbesondere eine Person oder ein Gegenstand, innerhalb der Lukenöffnung 1 befindet, ist eine Messvorrichtung nach dem Dreielektroden-Messprinzip zur Detektion von Objekten innerhalb der Lukenöffnung 1 vorgesehen. Wie die Darstellung in Fig. 1 zeigt, sind an der Innenfläche 3 der Lukenöffnung 1 eine Anregungselektrode 9 und eine insbesondere streifenförmige Messelektrode 10.1 angeordnet. Die Anregungselektrode 9 ist mit einem Spannungsgenerator 8 verbunden und erzeugt insbesondere innerhalb der Lukenöffnung 1 ein Anregungsfeld. Die Messelektrode 10.1 befindet sich innerhalb des Wirkbereichs dieses Anregungsfeldes und ist über eine Signalstrecke 12.1, die insbesondere ein Verbindungskabel 14.1 umfasst, mit einer Auswerteeinheit 18 verbunden. Die Anregungselektrode 9 und die Messelektrode 10.1 sind gegenüber der Lukenöffnung 1 feststehend angeordnet. Durch die Anordnung der Anregungselektrode 9 und der Messelektrode 10.1 am Rand der runden Lukenöffnung 1 wird ein Schutzvolumen definiert, welches nach Art einer Zylinderscheibe ausgebildet ist, bei der die obere und untere Begrenzung leicht gewölbt ist. Durch die Messvorrichtung kann somit die Detektion von Objekten nicht nur im Randbereich des Schutzvolumens, sondern auch in dem Schutzvolumen selbst ermöglicht werden. Beim Schließen der Lukenöffnung 1 mit dem Lukendeckel 2 wird diese räumliche Schutzzone verändert. Dabei ist die Schutzzone derart ausgestaltet, dass das Schließen des Lukendeckels 2 nur dann verhindert wird, wenn die Gefahr besteht, dass das sich in der Lukenöffnung befindende Objekt, zwischen dem Lukendeckel 2 und dem Rand der Lukenöffnung 1 eingequetscht werden könnte. Befindet sich beispielsweise eine Hand eines Besatzungsmitglieds des militärischen Fahrzeugs bei Schließen des Lukendeckels 2 in der Mitte der Lukenöffnung 1, so wird der Schließvorgang nicht unterbrochen. Liegt die Hand jedoch an dem Rand der Lukenöffnung 1 an, auf welchen sich der Lukendeckel 2 beim Schließen hinzu bewegt, so wird das Schließen des Lukendeckels 2 verhindert.

Ferner ist der Lukendeckel 2 mit dem Schutzleiterpotential 7 verbunden, vgl. Fig. 2, so dass eine Beeinträchtigung der Messergebnisse durch elektrostatische Effekte, wie z. B. sich auf dem Lukendeckel 2 ansammelnde Ladungsträger, nicht zu befürchten ist. Es bestehen daher auch keine besonderen Anforderungen an die Oberfläche des Lukendeckels 2.

Die Anregungselektrode 9 und/oder die Messelektrode 10.1 kann auch abseits der Lukenöffnung 1 angebracht sein, sofern sich die Messelektrode im Anregungsfeld der Anregungselektrode befindet. Hierdurch kann ebenfalls eine Absicherung des Ausstiegbereichs gewährleistet werden.

Um den Schutz des Spannungsgenerators 8 sowie der Auswerteeinheit 18 zu ermöglichen und die Lukenöffnung 1 nicht unnötig zu verkleinern, sind der Spannungsgenerator 8 und die Auswerteeinheit 18 abseits der Lukenöffnung 1 innerhalb des Fahrzeugs angeordnet. Dadurch ergeben sich lange Verbindungswege, insbesondere eine lange Signalstrecke 12.1, die ein Verbindungskabel 14.1 umfasst, welches eine Länge von mehreren Metern haben kann. Das Verbindungskabel 14.1 ist als ungeschirmtes Kabel ausgeführt und überträgt elektronisch aufbereitete, verstärkte und gleichgerichtete Signale. Auch alle weiteren Kabel der Messvorrichtung, insbesondere die Spannungsversorgungskabel, sind als ungeschirmte Kabel ausgeführt.

Das erfindungsgemäße Detektionsverfahren lässt sich in gleicher Weise auch an anderen Fahrzeuglukentypen nutzen, insbesondere an Schwenkluken.

In Fig. 2 ist das Blockdiagramm einer Messvorrichtung mit zwei Sensoren 11.1, 11.2 dargestellt, anhand dessen das erfindungsgemäße Detektionsverfahren näher erläutert werden soll. Jeder Sensor 11.1, 11.2 umfasst eine Messelektrode 10.1, 10.2 und ist über eine Signalstrecke 12.1, 12.2 mit der Auswerteeinheit 18 verbunden. Die Signalstrecke 12.1, 12.2 weist einen Signalaufbereiter 13.1, 13.2 sowie ein Verbindungskabel 14.1, 14.2 auf, das mit der Auswerteeinheit 18 über eine Kabelschnittstelle 21.1, 21.2 verbunden ist. Diese Kabelschnittstelle 21.1, 21.2 kann als variable Streck- oder Klemmverbindung sowie als feste Verbindung, insbesondere Lötverbindung, ausgeführt sein.

Innerhalb der Auswerteeinheit 18 ist der Signalstrecke 12.1, 12.2 ein Differenzverstärker 15.1, 15.2 sowie eine Triggerschaltung 16.1, 16.2 zugeordnet. Während der erste Eingang des Differenzverstärkers 15.1 mit der Signalstrecke 12.1 verbunden ist, ist der zweite Eingang des Differenzverstärkers 15.1 mit einer Einstellvorrichtung 20.1, 20.2 verbunden. Die Einstellvorrichtung 20.1, 20.2 ist als Potentiometer ausgeführt und ihrerseits mit einer Referenzspannungsquelle 29 verbunden. Über die Einstellvorrichtung 20.1, 20.2 können Arbeitspunkt-Offsetverschiebungen für die Differenzverstärker 15.1, 15.2 erfolgen. Damit kann das Ausgangssignal der Differenzverstärker 15.1, 15.2 derart beeinflusst werden, dass der jeweils erforderliche Arbeitsbereich eingestellt werden kann. Durch unterschiedliche Sensoreigenschaften bzw. Umgebungsbedingungen hervorgerufene Potentialunterschiede können ausgeglichen und für alle Messkanäle identische Arbeitsbereiche eingestellt werden.

Der Ausgang des Differenzverstärkers 15.1, 15.2 ist mit dem Eingang einer Triggerschaltung 16.1, 16.2 verbunden. Die Triggerschaltung 16.1, 16.2 verfügt über eine feste Triggerschwelle und erzeugt aus dem analogen Ausgangssignal des Differenzverstärkers 15.1, 15.2 ein digitales Signal, welches angibt, ob das Ausgangssignal des Differenzverstärkers 15.1, 15.2 über oder unter der Triggerschwelle liegt. Mit einem ODER-Gatter 17 werden die Ausgangssignale der Triggerschaltungen 16.1, 16.2 zu einem Kollisionssignal 19 kombiniert. Dieses gibt an, ob sich ein Objekt innerhalb der Lukenöffnung 1 befindet und steht der Antriebssteuereinheit 28 des Lukendeckels 2 als Warnsignal zur Verfügung.

Ein Spannungsgenerator 8 generiert zwischen dem Schutzleiterpotential 7 und der Anregungselektrode 9 eine Spannung, insbesondere eine Wechselspannung. Der metallische Korpus des Fahrzeugs ist mit dem Schutzleiterpotential 7 verbunden. Ferner besteht eine elektrisch leitende Verbindung zwischen dem Korpus des Fahrzeugs und dem Lukendeckel 2. Ausgehend von der Anregungselektrode 9 bildet sich innerhalb der Lukenöffnung 1 ein elektrisches Feld, in dessen Wirkbereich sich die Sensoren 11.1, 11.2 befinden. Wird nun ein Objekt in die Lukenöffnung 1 eingeführt, so bewirkt dies eine Feldänderung und somit eine Änderung des elektrischen Potentials an den Messelektroden 10.1, 10.2 der Sensoren 11.1, 11.2, die über die Signalstrecken 12.1, 12.2 übertragen und von der Auswerteeinheit 18 ausgewertet wird.

Grundsätzlich besteht die Problematik, dass die Feldänderung, die durch den sich in die Lukenöffnung 1 bewegenden Lukendeckel 2 hervorgerufen wird, in der gleichen Größenordnung wie die eines zu detektierenden Objekts liegen kann. Somit ist auch die Änderung des elektrischen Potentials an den Messelektroden 10.1, 10.2 durch den Lukendeckel 2 in der gleichen Größenordnung wie die Änderung durch ein zu detektierendes Objekt. Der Lukendeckel 2 könnte also fälschlicherweise als Objekt detektiert werden und die Auswerteeinheit 18 könnte fälschlicherweise ein Kollisionssignal 19 erzeugen. Dadurch würde die Bewegung des Lukendeckels 2 von der Antriebssteuereinheit 28 verhindert, der Lukendeckel 2 würde sich selbst blockieren. Folglich wäre auch eine zuverlässige Unterscheidung zwischen einem zu detektierenden Objekt und dem Lukendeckel 2 nicht möglich.

Um die Zuverlässigkeit der Detektion zu erhöhen, wird die von dem Spannungsgenerator 8 erzeugte Spannung in Abhängigkeit von der Stellung des Lukendeckels 2 derart eingestellt, dass die vom Lukendeckel 2 erzeugte Feldänderung im Bereich der Messelektroden 10.1, 10.2 im Wesentlichen kompensiert wird. Dies hat zur Folge, dass das Potential an den Messelektroden 10.1, 10.2 beim Schließen des Lukendeckels 2 im Wesentlichen konstant ist. Die Kompensation kann in einem Bereich erfolgen, der mir der Schaltschwelle sowie der Hysterese der Triggerschaltungen 16.1, 16.2 korreliert, so dass eine Auslösung des Kollisionssignals 19 sicher vermieden werden kann. Beim Schließen des Lukendeckels 2 wird der Lukendeckel 2 von der Messvorrichtung folglich nicht als Objekt erkannt und die Bewegung des Lukendeckels 2 wird nicht von der Antriebssteuereinheit 28 verhindert. Der Einfluss des Lukendeckels 2 auf die Messvorrichtung wird also durch die Veränderung der vom Spannungsgenerator 8 erzeugten Spannung kompensiert.

Der zeitliche Verlauf der vom Spannungsgenerator 8 erzeugten Spannung wird als Spannungsverlauf bezeichnet. Der Spannungsverlauf kann insbesondere eine Wechselspannung sein, deren Amplitude oder Frequenz verändert wird. Ferner kann vorgesehen sein, dass die Form des Spannungsverlaufs, insbesondere die Flankensteilheit, verändert wird.

Zur Änderung des von dem Spannungsgenerator 8 erzeugten Spannungsverlaufs ist der Spannungsgenerator 8 mit einer Steuereinheit 25 verbunden. Die Steuereinheit 25 umfasst einen Speicher 26 sowie einen Microcontroller 27, wobei der Speicher 26 auch als interner Speicher des Microcontrollers 27 ausgestaltet sein kann. Die Steuereinheit 25 ist ferner zur Ermittlung der Lukendeckelstellung mit der Antriebssteuereinheit 28 verbunden. Wahlweise kann die Steuereinheit 25 auch mit einem Lukenstellungssensor verbunden sein. Ein weiterer Eingang der Steuereinheit 25 ist mit dem Ausgang des Differenzverstärkers 15.1 verbunden.

Alternativ kann die Steuereinheit 25 derart gestaltet sein, dass der Microcontroller 27 entfernbar ist. Dies kann beispielsweise durch die Verwendung eines Sockels gewährleistet werden, in den der Microcontroller 27 einsteckbar ist, oder durch eine externe Schnittstelle, z.B. in Form einer Steckverbindung. Im Normalbetrieb kann diese Steckverbindung abgedeckt und deaktiviert sein. Ferner kann eine automatische Erkennung des Microcontrollers 27 vorgesehen sein, durch die beim Einstecken des Microcontrollers 27 der Betriebszustand gewechselt werden kann. Ist der Microcontroller 27 nicht vorhanden, so wird das Signal der Antriebssteuereinheit 28, welches die Stellung des Lukendeckels 2 angibt, als Auswahlsignal direkt dem Speicher 26 zugeführt. Abhängig von dem Auswahlsignal, das die Stellung des Lukendeckels 2 angibt, wird ein Ausgabewert, der das Stellsignal für den Spannungsgenerator 8 ist, aus dem Speicher 26 ausgelesen. Mithilfe einer in dem Speicher 26 abgelegten Vorschrift kann das Stellsignal für den Spannungsgenerator 8 in Abhängigkeit von der Lukendeckelstellung eingestellt werden.

Die in Fig. 2 dargestellte Messvorrichtung ist dazu geeignet, eine durch den Lukendeckel 2 verursachte Feldbeeinflussung im Wesentlichen zu kompensieren. Dazu wird, beispielsweise nach Installation der Messvorrichtung eine Kalibrierungsprozedur durchgeführt, während der die Lukenöffnung 1 frei von Objekten ist. Die Kalibrierungsprozedur kann bei der oben beschriebenen automatischen Erkennung des Microcontrollers 27 beispielsweise durch das Verbinden des Microcontrollers 27 mit einer Steckerschnittstelle oder einem Sockel aktiviert werden. Während der Kalibrierungsprozedur wird über die Verbindung vom Ausgang des Differenzverstärkers 15.1 zu der Steuereinheit 25 ein Regelkreis gebildet. Die Regelstrecke umfasst das von der Anregungselektrode 9 erzeugte elektrische Feld, die Messelektrode 10.1 sowie die Signalstrecke 12.1. Die Beeinflussung des elektrischen Feldes durch den Lukendeckel entspricht dabei der Störgröße. Ferner entspricht die Steuereinheit 25 dem Regler des Regelkreises sowie der Spannungsgenerator 8 dem Stellglied. Der Sollwert liegt am Eingang des Differenzverstärkers 15.1 an und wird durch eine Einstellvorrichtung 20.1, insbesondere ein Potentiometer, vorgegeben.

Während der Kalibrierungsprozedur wird der Lukendeckel zwischen der vollständig geöffneten und der vollständig geschlossenen Stellung bewegt. Dabei stellt die Steuereinheit 25 als Regler den Stellwert für den Spannungsgenerator 8 derart ein, dass das Ausgangssignal des Differenzverstärkers 15.1 für alle Stellungen des Lukendeckels 2 im Wesentlichen konstant bleibt. Die während der Kalibrierungsprozedur ermittelten Stellwerte für den Spannungsgenerator 8 in dem Speicher 26 der Steuereinheit 25 in Abhängigkeit von der Stellung des Lukendeckels 2 hinterlegt.

In einer Abwandlung der Messvorrichtung kann statt des Ausgangs des Differenzverstärkers 15.1 auch der Ausgang des Differenzverstärkers 15.2 mit der Steuereinheit verbunden sein. Ferner kann in einer zusätzlichen Einheit ein Mittelwert beider Signale gebildet werden und der Ausgang dieser zusätzlichen Einheit mit der Steuereinheit verbunden sein. In einer Kalibrierungsprozedur für eine dieser alternativen Messvorrichtungen, wird entsprechend das Ausgangssignal des Differenzverstärkers 15.2 bzw. das Ausgangssignal der zusätzlichen Einheit zur Mittelwertbildung im Wesentlichen konstant eingeregelt.

Ist die Steuereinheit 25, wie oben erwähnt, derart ausgeführt, dass der Microcontroller 27 entfernbar ist, so kann er nach der Durchführung der Kalibrierungsprozedur aus der Steuereinheit 25 entnommen werden, da er für die Detektion von Objekten innerhalb der Lukenöffnung 1 nicht weiter erforderlich ist. Während der Durchführung des Verfahrens zur Detektion von Objekten ist auch die Verbindung vom Ausgang des Differenzverstärkers 15.1 zur Steuereinheit 25 nicht notwendig. In diesem Fall wird die Stellung des Lukendeckels 2 von der Antriebssteuereinheit 28 zu der Steuereinheit 25 übermittelt. In Abhängigkeit von der Stellung des Lukendeckels 2 wird aus dem Speicher 26 ein Stellwert für den Spannungsgenerator 8 ausgelesen und diesem übermittelt. Somit kann der Spannungsgenerator 8 über die Anregungselektrode 9 ein elektrisches Feld erzeugen, welches unabhängig von der Stellung des Lukendeckels 2 im Bereich der Messelektrode im Wesentlichen konstant bleibt, solange sich kein Objekt in der Lukenöffnung 1 befindet.

Die Durchführung der Kalibrierungsprozedur kann ferner der Funktionsüberwachung der Messvorrichtung dienen. Hierzu kann während der Kalibrierungsprozedur ein definierter Zustand, beispielsweise eine vorgegebene Stellung des Lukendeckels 2, eingestellt werden und ein in diesem Zustand ermittelter Signalpegel gespeichert werden. Zur Funktionsüberwachung der Messvorrichtung während der Detektion von Objekten kann der definierte Zustand dann wieder hergestellt werden und der ermittelte Signalpegel mit dem während der Kalibrierungsprozedur gespeicherten Signalpegel verglichen werden. Bei einer Abweichung des ermittelten Signalpegels von dem gespeicherten Signalpegel kann eine Funktionsstörung gemeldet werden.

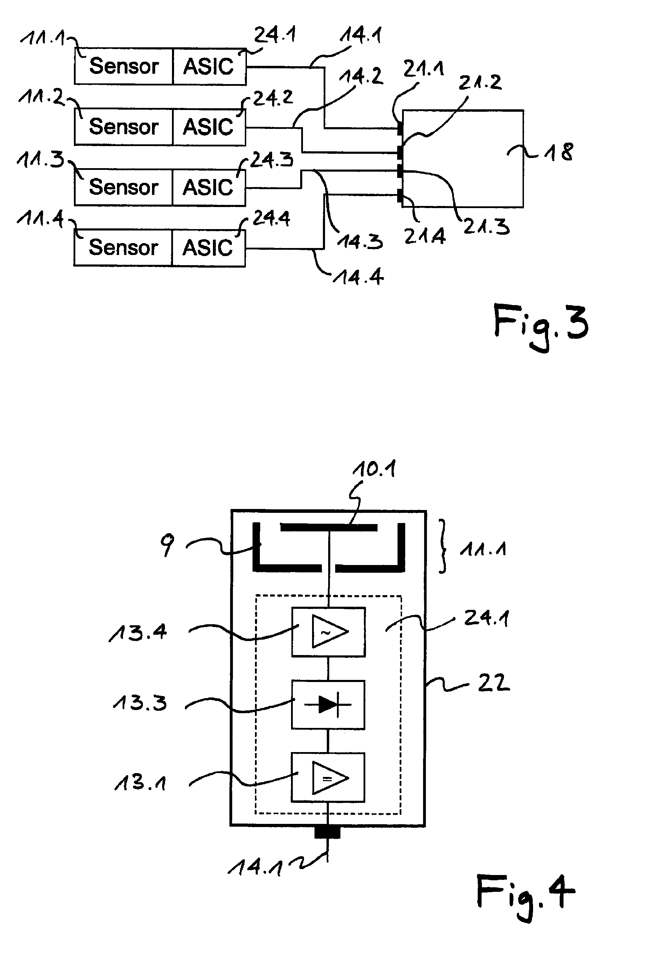

Eine weitere Ausführung der erfindungsgemäßen Messvorrichtung ist in Fig. 3 dargestellt. Diese verfügt über vier Sensoren 11.1, 11.2, 11.3, 11.4, die jeweils in einer baulichen Einheit mit einer elektronischen Schaltung 24.1, 24.2, 24.3, 24.4 ausgeführt sind. Dabei kann die elektronische Schaltung 24.1, 24.2, 24.3, 24.4 als ASIC vorliegen, der auf einem gemeinsamen Substrat, insbesondere einer Platine, mit dem Sensor 11.1, 11.2, 11.3, 11.4 angeordnet ist. Da der Sensor 11.1, 11.2, 11.3, 11.4 ein verhältnismäßig schwaches Signal abgibt und die elektronische Schaltung 24.1, 24.2, 24.3, 24.4 einen Signalaufbereiter umfasst, ist die Anordnung in einer baulichen Einheit besonders vorteilhaft, um große Signalpegel auf der Signalstrecke zu erreichen. Die Signalstrecken umfassen Verbindungskabel 14.1, 14.2, 14.3, 14.4, die über Kabelschnittstellen 21.1, 21.2, 21.3, 21.4 mit der Auswerteeinheit 18 verbunden sind. Diese Auswerteeinheit 18 verfügt entsprechend über vier Messkanäle für die angeschlossenen Sensoren 11.1, 11.2, 11.3, 11.4.

In Fig. 4 ist im Detail eine messelektrodenseitige Anordnung eines Signalaufbereiters 13.1, 13.3 in einem gemeinsamen Gehäuse 22 mit dem Sensor 11.1 dargestellt. Der Sensor 11.1 umfasst eine Messelektrode 10.1 und eine Anregungselektrode 9. Mit dem Signalaufbereiter 13.4 erfolgt eine Wechselspannungsverstärkung des über die Messelektrode 10.1 empfangenen Signals. Im nachfolgenden Signalaufbereiter 13.3 wird das Ausgangssignal des Wechselspannungsverstärkers 13.4 gleichgerichtet und einem dritten Signalaufbereiter 13.1 zugeführt. Dieser dritte Signalaufbereiter 13.1 verstärkt das gleichgerichtete Signal und ist direkt mit dem Sensorkabel 14.1 verbunden, über welches die Verbindung mit der Auswerteeinheit 18 hergestellt ist. Dabei können die Signalaufbereiter 13.1 und 13.3 Teil einer elektronischen Schaltung 24.1, insbesondere eines IC oder ASIC sein. In einer besonders kompakten Ausführung können die Signalaufbereiter 13.1 und 13.3 auf einer gemeinsamen Platine mit der Messelektrode 10.1 angeordnet sein. Ferner ist es möglich, den Signalaufbereiter im Zwischenraum zwischen der Messelektrode 10.1 und der Anregungselektrode 9, insbesondere innerhalb einer Platine, anzuordnen.

### Bezugszeichen:

- 1: Lukenöffnung
- 2: Lukendeckel
- 3: Lukeninnenfläche
- 4: Fahrzeugaußenfläche
- 5: Außenplatte
- 6: Innenplatte
- 7: Schutzleiterpotential
- 8: Spannungsgenerator
- 9: Anregungselektrode
- 10.1 - 10.2: Messelektrode
- 11.1 - 11.4: Sensor
- 12.1 - 12.2: Signalstrecke
- 13.1 - 13.4: Signalaufbereiter
- 14.1 - 14.4: Verbindungskabel
- 15.1 - 15.2: Differenzverstärker
- 16.1 - 16.2: Triggerschaltung
- 17: ODER-Gatter
- 18: Auswerteeinheit
- 19: Kollisionssignal
- 20.1 - 20.2: Einstellvorrichtung
- 21.1 - 21.4: Kabel-Schnittstelle
- 22: Gehäuse
- 24.1 - 24.4: elektronische Schaltung
- 25: Steuereinheit
- 26: Speicher
- 27: Microcontroller
- 28: Antriebssteuereinheit
- 29: Referenzspannungsquelle
- P: Bewegungsrichtung

## Patentansprüche

1. Verfahren zur Detektion eines Objekts in einer mit einem bewegbaren Lukendeckel (2) verschließbaren Lukenöffnung (1), insbesondere an einem militärischen Fahrzeug, mit einer Anregungselektrode (9) zur Erzeugung eines Felds, insbesondere gegenüber einem metallischen Korpus des Fahrzeugs, und einer Messelektrode (10.1, 10.2) zum Ermitteln von durch das Objekt verursachten Feldänderungen, wobei das Feld beim Schließen des Lukendeckels (2) in Abhängigkeit von der Stellung des Lukendeckels (2) erzeugt wird und wobei die Anregungselektrode (9) mit einem Spannungsgenerator (8) verbunden ist und der vom Spannungsgenerator (8) erzeugte Spannungsverlauf, insbesondere hinsichtlich Amplitude, Frequenz und/oder Flankensteilheit, in Abhängigkeit von der Stellung des Lukendeckels (2) eingestellt wird,
**dadurch gekennzeichnet,**
**dass** die Stellung des Lukendeckels (2) einer Steuereinheit (25) zum Steuern des Spannungsgenerators (8) zugeführt wird, welche für eine Kalibrierungsprozedur einen Microcontroller umfasst, der vor der Detektion entfernt wird.

2. Verfahren nach Anspruch 1, **dadurch gekennzeichnet, dass** zur Ermittlung der Lukendeckelstellung die Steuereinheit (25) mit einer Antriebssteuereinheit (28) des Lukendeckels und/oder mit einem Lukenstellungssensor verbunden ist.

3. Verfahren nach einem der vorhergehenden Ansprüche, **dadurch gekennzeichnet, dass** eine, insbesondere aus einem Speicher (26) abrufbare, Vorschrift zur Einstellung des Spannungsverlaufs verwendet wird.

4. Verfahren nach Anspruch 3, **dadurch gekennzeichnet, dass** die Vorschrift derart gestaltet ist, dass die durch den Lukendeckel (2) verursachte Feldbeeinflussung im Wesentlichen kompensiert wird.

5. Verfahren nach Anspruch 3 oder 4, **dadurch gekennzeichnet, dass** die Vorschrift derart gestaltet ist, dass bei freier Lukenöffnung (1) ein von der Messelektrode (10.1) an eine Auswerteeinheit (18) übermitteltes Signal beim Schließen des Lukendeckels (2) im Wesentlichen konstant gehalten wird.

6. Verfahren nach einem der Ansprüche 3 bis 5, **dadurch gekennzeichnet, dass** die Vorschrift in einer der Detektion vorausgehenden Kalibrierungsprozedur ermittelt wird, bei der die Lukenöffnung (2) frei von Objekten ist.

7. Verfahren nach Anspruch 6, **dadurch gekennzeichnet, dass** in der Kalibrierungsprozedur die Messelektrode (10.1) mit der Steuereinheit (25) zur Bildung eines Regelkreises verbunden ist.

8. Verfahren nach Anspruch 7, **dadurch gekennzeichnet, dass** der Sollwert des Regelkreises über eine Einstellvorrichtung (20.1), insbesondere ein Potentiometer, einstellbar ist.

9. Verfahren nach einem der Ansprüche 6 bis 8, **dadurch gekennzeichnet, dass** in der Kalibrierungsprozedur der Lukendeckel (2) zwischen zwei unterschiedlichen Stellungen bewegt wird, insbesondere zwischen der vollständig geöffneten und der vollständig geschlossenen Stellung.

10. Messvorrichtung zur Detektion eines Objekts in einer mit einem bewegbaren Lukendeckel (2) verschließbaren Lukenöffnung (1), insbesondere an einem militärischen Fahrzeug, mit einer Anregungselektrode (9) zur Erzeugung eines Felds, insbesondere gegenüber einem metallischen Korpus des Fahrzeugs, einer Messelektrode (10.1, 10.2) zum Ermitteln von durch das Objekt verursachten Feldänderungen, einem Spannungsgenerator (8), insbesondere einem Wechselspannungsgenerator, und einer Steuereinheit (25) zum Steuern des Spannungsgenerators (8),
wobei die Messvorrichtung mit einer Antriebssteuereinheit (28) des Lukendeckels (2) und/oder mit einem Lukenstellungssensor verbindbar ist,
wobei das Feld beim Schließen des Lukendeckels (2) in Abhängigkeit von der Stellung des Lukendeckels erzeugbar ist,
wobei die Anregungselektrode (9) mit dem Spannungsgenerator (8) verbunden ist und der vom Spannungsgenerator (8) erzeugte Spannungsverlauf, insbesondere hinsichtlich Amplitude, Frequenz und/oder Flankensteilheit, in Abhängigkeit von der Stellung des Lukendeckels (2) einstellbar ist, wobei der Spannungsgenerator (8) mit der Steuereinheit (25) zum Steuern des Spannungsgenerators verbunden ist,
**dadurch gekennzeichnet, dass** die Steuereinheit (25) einen entfernbar ausgebildeten Microcontroller (27) umfasst, der nur für eine Kalibrierungsprozedur erforderlich ist und im Normalbetrieb entfallen kann.

11. Messvorrichtung nach Anspruch 10, **dadurch gekennzeichnet, dass** die Messelektrode (10.1) mit der Steuereinheit (25) verbindbar ist, zur Bildung eines Regelkreises mit dem Spannungsgenerator (8) und der Anregungselektrode (9).

12. Messvorrichtung nach einem der Ansprüche 10 oder 11, **dadurch gekennzeichnet, dass** die Messelektrode (10.1, 10.2) über eine Signalstrecke (12.1, 12.2) mit einer Auswerteeinheit (18) zur Auswertung der von der Messelektrode (10.1, 10.2) abgegebenen Signale verbunden ist und dass ein elektronischer Signalaufbereiter (13.1 - 13.4), insbesondere ein Verstärker und/oder ein Gleichrichter, messelektrodenseitig in der Signalstrecke (12.1, 12.2) angeordnet ist.

13. Messvorrichtung nach Anspruch 12, **dadurch gekennzeichnet, dass** der Signalaufbereiter (13.1 - 13.4) in einer elektronischen Schaltung, insbesondere in einem IC, integriert ist.

14. Fahrzeug mit einer über einen Lukendeckel (2) verschließbaren Lukenöffnung (1) und einer Messvorrichtung nach einem der Ansprüche 10 bis 13, wobei insbesondere die Anregungselektrode (9) und/oder die Messelektrode (10.1, 10.2) im Bereich der Lukenöffnung (1) angeordnet ist.

## Claims

1. Method for detecting an object in a hatch opening (1) which can be closed by a movable hatch cover (2) in particular on a military vehicle, the device having an excitation electrode (9) for generating a field, in particular with respect to a metallic portion of the vehicle, and a measuring electrode (10.1, 10.2) for determining field variations caused by the object, wherein the field being generated when the hatch cover (2) is closed in dependence upon the position thereof, and wherein the excitation electrode (9) is connected to a voltage generator (8) and the voltage curve generated by the voltage generator (8), in particular as regards amplitude, frequency and/or slew rate, is set in dependence on the position of the hatch cover (2), **characterised in that** the position of the hatch cover (2) is fed to a control unit (25) for controlling the voltage generator (8) which comprises a micro-controller for a calibration procedure, which is removed prior to detection.

2. Method according to claim 1, **characterised in that**, in order to determine the position of the hatch cover, the control unit (25) is connected to a drive control unit (28) of the hatch cover and/or to a hatch position sensor.

3. Method according to one of the preceding claims, **characterised in that** a specification for adjusting the voltage curve, which can particularly be called up from a storage device (26), is used.

4. Method according to claim 3, **characterised in that** the specification is designed so that the field interference caused by the hatch cover (2) is substantially compensated.

5. Method according to claim 3 or 4, **characterised in that** the specification is designed so that, in the case of a free hatch opening (1), a signal transmitted by a measuring electrode (10.1) to an evaluation unit (18) when the hatch cover (2) is closed is kept substantially constant.

6. Method according to one of claims 3 to 5, **characterised in that** the specification is detected in a calibration procedure preceding the detection, in which the hatch opening (2) is free of objects.

7. Method according to claim 6, **characterised in that**, in the calibration procedure, the measuring electrode (10.1) is connected to the control unit (25) to form a control loop.

8. Method according to claim 7, **characterised in that** the set point of the control loop is adjustable via an adjustment device (20.1), in particular a potentiometer.

9. Method according to one of claims 6 to 8, **characterised in that**, in the calibration procedure, the hatch cover (2) is moved between two different positions, in particular between the fully open and the fully closed position.

10. Measuring device for detecting an object in a hatch opening (1) which can be closed by a movable hatch cover (2) in particular on a military vehicle, the device having an excitation electrode (9) for generating a field, in particular with respect to a metallic portion of the vehicle, a measuring electrode (10.1, 10.2) for determining field variations caused by the object, a voltage generator (8), in particular an alternating voltage generator, and a control unit (25) to control the voltage generator (8), wherein the measuring device can be connected to a drive control unit (28) of the hatch cover (2) and/or to a hatch position sensor, wherein the field can be generated when the hatch cover (2) is closed in dependence upon the position thereof, and wherein the excitation electrode (9) is connected to a voltage generator (8) and the voltage curve generated by the voltage generator (8), in particular as regards amplitude, frequency and/or slew rate, can be set in dependence on the position of the hatch cover (2), wherein the voltage generator (8) is connected to the control unit (25) to control the voltage generator, **characterised in that** the control unit (25) comprises a removably designed micro-controller (27), which is only necessary for a calibration procedure, and can be dispensed with during normal operation.

11. Measuring device according to claim 10, **characterised in that** the measuring electrode (10.1) can be connected to the control unit (25) to form a control loop with the voltage generator (8) and the excitation electrode (9).

12. Measuring device according to one of claims 10 or 11, **characterised in that** the measuring electrode (10.1, 10.2) is connected to a valuation unit (18) via a signal path (12.1, 12.2) to evaluate the signal transmitted by the measuring electrode (10.1, 10.2) and **in that** an electronic signal conditioner (13.1 - 13.4), in particular an amplifier and/or a rectifier, is disposed in the signal path (12.1, 12.2) of the measuring electrode.

13. Measuring device according to claim 12, **characterised in that** the signal conditioner (13.1 - 13.4) is integrated into an electronic circuit, in particular into an IC.

14. Vehicle with a hatch opening (1) which can be closed by a hatch cover (2) and a measuring device according to one of claims 10 to 13, wherein, in particular, the excitation electrode (9) and/or the measuring electrode (10.1, 10.2) is disposed in the area of the hatch opening (1).

## Revendications

1. Procédé servant à la détection d'un objet dans une ouverture de lucarne (1) pouvant être fermée par un couvercle de lucarne (2) mobile, en particulier sur un véhicule militaire, comprenant une électrode d'excitation (9) servant à générer un champ, en particulier par rapport à un corps métallique de véhicule, et une électrode de mesure (10.1, 10.2) servant à déterminer des variations de champ liées à l'objet, dans lequel le champ est généré lors de la fermeture du couvercle de lucarne (2) en fonction de la position du couvercle de lucarne (2) et dans lequel l'électrode d'excitation (9) est reliée à un générateur de tension (8) et la courbe de tension générée par le générateur de tension (8), en particulier en ce qui concerne l'amplitude, la fréquence et/ou la pente de signal, est ajustée en fonction de la position du couvercle de lucarne (2),
**caractérisé en ce que**
la position du couvercle de lucarne (2) est amenée à une unité de commande (25) servant à commander le générateur de tension (8), laquelle comprend, en vue d'une procédure de calibrage, un microcontrôleur, qui est retiré avant la détection.

2. Procédé selon la revendication 1, **caractérisé en ce que** l'unité de commande (25) est reliée à une unité de commande d'entraînement (28) du couvercle de lucarne et/ou à un capteur de position de lucarne afin de déterminer la position de couvercle de lucarne.

3. Procédé selon l'une quelconque des revendications précédentes, **caractérisé en ce qu'**on utilise une spécification, en particulier qui peut être consultée dans une mémoire (26), afin d'ajuster la courbe de tension.

4. Procédé selon la revendication 3, **caractérisé en ce que** la spécification est mise au point de manière à compenser essentiellement l'impact sur le champ provoqué par le couvercle de lucarne (2).

5. Procédé selon la revendication 3 ou 4, **caractérisé en ce que** la spécification est mise au point de manière à maintenir, dans le cas d'une ouverture de lucarne (1) dégagée, un signal transmis par l'électrode de mesure (10.1) à une unité d'analyse (18) essentiellement constant lors de la fermeture du couvercle de lucarne (2).

6. Procédé selon l'une quelconque des revendications 3 à 5, **caractérisé en ce que** la spécification est déterminée lors d'une procédure de calibrage précédent la détection, lors de laquelle l'ouverture de lucarne (2) est libre de tout objet.

7. Procédé selon la revendication 6, **caractérisé en ce que** l'électrode de mesure (10.1) est reliée à l'unité de commande (25) afin de former un circuit de réglage lors de la procédure de calibrage.

8. Procédé selon la revendication 7, **caractérisé en ce que** la valeur de consigne du circuit de réglage peut être ajustée par l'intermédiaire d'un dispositif d'ajustement (20.1), en particulier un potentiomètre.

9. Procédé selon l'une quelconque des revendications 6 à 8, **caractérisé en ce que** le couvercle de lucarne (2) est déplacé, lors de la procédure de calibrage, entre deux positions différentes, en particulier entre la position complètement ouverte et la position complètement fermée.

10. Dispositif de mesure servant à détecter un objet dans une ouverture de lucarne (1) pouvant être fermée par un couvercle de lucarne (2) mobile, en particulier sur un véhicule militaire, comprenant une électrode d'excitation (9) servant à générer un champ, en particulier par rapport à un corps métallique du véhicule, une électrode de mesure (10.1, 10.2) servant à déterminer des variations de champ liées à l'objet, un générateur de tension (8), en particulier un générateur de tension alternative, et une unité de commande (25) servant à commander le générateur de tension (8),
dans lequel le dispositif de mesure peut être relié à une unité de commande d'entraînement (28) du couvercle de lucarne (2) et/ou à un capteur de position de lucarne,
dans lequel le champ peut être généré, lors de la fermeture du couvercle de lucarne (2), en fonction de la position du couvercle de lucarne,
dans lequel l'électrode d'excitation (9) est reliée au générateur de tension (8) et la courbe de tension générée par le générateur de tension (8), en particulier en ce qui concerne l'amplitude, la fréquence et/ou la pente de signal, peut être ajustée en fonction de la position du couvercle de lucarne (2),
dans lequel le générateur de tension (8) est relié à l'unité de commande (25) servant à commander le générateur de tension,
**caractérisé en ce que** l'unité de commande (25) comprend un microcontrôleur (27) réalisé de manière à pouvoir être retiré, qui est utile uniquement en vue d'une procédure de calibrage et dont on peut se passer en fonctionnement normal.

11. Dispositif de mesure selon la revendication 10, **caractérisé en ce que** l'électrode de mesure (10.1) peut être reliée à l'unité de commande (25) afin de former un circuit de réglage avec le générateur de tension (8) et l'électrode d'excitation (9).

12. Dispositif de mesure selon l'une quelconque des revendications 10 ou 11, **caractérisé en ce que** l'électrode de mesure (10.1, 10.2) est reliée, sur un trajet de signal (12.1, 12.2), à une unité d'analyse (18) servant à analyser les signaux émis par l'électrode de mesure (10.1, 10.2), et **en ce qu'**un conditionneur de signaux (13.1 - 13.4) électronique, en particulier un amplificateur et/ou un redresseur, est disposé côté électrode de mesure sur le trajet de signal (12.1, 12.2).

13. Dispositif de mesure selon la revendication 12, **caractérisé en ce que** le conditionneur de signaux (13.1 - 13.4) est intégré dans un circuit électronique, en particulier dans un circuit intégré.

14. Véhicule comprenant une ouverture de lucarne (1) pouvant être fermée par l'intermédiaire d'un couvercle de lucarne (2) et un dispositif de mesure selon l'une quelconque des revendications 10 à 13, dans lequel, en particulier, l'électrode d'excitation (9) et/ou l'électrode de mesure (10.1, 10.2) sont disposées dans la zone de l'ouverture de lucarne (1).
